# EUROPEAN PATENT APPLICATION

(11) **EP 3 726 712 A1**
(43) Date of publication of application: **21.10.2020**
(21) Application number: 19764654.0
(22) Date of filing: 01.03.2019
(51) Int. Cl.: H02M 1/32, H02J 3/36

(54) **PROTECTION CIRCUIT OF CONVERTER, AND PROTECTION METHOD AND DEVICE**

(30) Priority: 05.03.2018 CN 201810178403
(71) Applicant: NR Electric Co., Ltd., Nanjing, Jiangsu 211102 (CN); NR Engineering Co., Ltd., Nanjing, Jiangsu 211102 (CN)
(72) Inventor: LU, Dongbin, Nanjing, Jiangsu 211102 (CN); LI, Haiying, Nanjing, Jiangsu 211102 (CN); CAO, Dongming, Nanjing, Jiangsu 211102 (CN)
(74) Representative: Kurig, Thomas
(86) International application number: PCT/CN2019/076744
(87) International publication number: WO 2019/170042

(57) **Abstract**

Provided by the present application are a protection circuit of a converter, and a protection method and device. The protection circuit is used to protect a voltage source converter in a voltage source-type valve group unit of an inverter station, and comprises: at least one bypass power electronic valve group, the bypass power electronic valve group being connected in parallel to a converter with direct current fault ride-through capability; an anode of the bypass power electronic valve group is connected to a positive electrode of the converter with direct current fault ride-through capability; a cathode of the bypass power electronic valve group is connected to a negative electrode of the converter with direct current fault ride-through capability; the converter with direct current fault ride-through capability comprises: a diode valve group and a voltage source-type valve group unit without direct current fault ride-through capability, which are connected in series; or a current source-type valve group unit and a voltage source-type valve group unit without direct current fault ride-through capability, which are connected in series; or a voltage source-type valve group unit with direct current fault ride-through capability.

## Description

### Technical Field

The present application belongs to the field of flexible DC transmission and HVDC transmission, and particularly relates to a protection circuit of a converter, and a protection method and device.

### Background

Current source-type HVDC transmission based on thyristors has the advantage of small converter loss, and restarting DC systems by means of phase shift when DC lines are faulty. The current source-type HVDC transmission has the disadvantages that an inverter side converter, operating under active inversion, cannot connect a passive system; a commutation failure may be caused by disturbances when weak AC systems are connected to the inverter stations; due to large reactive power consumption and a high harmonic content of voltage and current, a filter device needs to be installed to provide reactive power and filtering.

The DC transmission based on voltage source converters has the advantage of high controllability, being able to connect to a passive system, and needing no reactive compensation device. The DC transmission based on the voltage source converters has the disadvantage of large converter switch loss, and half-bridge modular multilevel converters cannot control the currents during DC-side faults; when a fault occurs, the fault can only be removed by opening AC-side breakers.

With regard to a DC-side fault, the ABB additionally configure a breaker in the DC circuit to remove the DC-side fault; the SIEMENS uses a full-bridge circuit to remove the DC-side fault; the Alstom uses a full-bridge circuit connected to power electronic switch devices in series in a bridge arm, to remove the DC-side fault; and Zhejiang University uses a diode connected in series to a main loop to remove the DC-side fault.

The inventor found that, in the above solutions, overvoltage and overcurrent still appear in the voltage source converters when extreme faults, such as grounding between the voltage source converters and transformers and three-phase shortcircuit of AC systems, happen to the DC transmission systems.

### Summary

The objective of the present application is to provide a protection circuit of a converter to prevent a voltage source converter against serious overvoltage or overcurrent and to control a converter of a rectifier station to make its DC current reach zero for a restart in the case of a fault, thus guaranteeing reliable operation of a voltage source-type valve group unit. The present application further provides a protection method and device of a converter to control the protection circuit of a converter.

An embodiment of the present application provides a protection circuit of a converter. The protection circuit is used to protect a voltage source converter in a voltage source-type valve group unit of an inverter station, and comprises: at least one bypass power electronic valve group being connected in parallel to a converter with direct current fault ride-through capability and having an anode connected to a positive electrode of the converter with direct current fault ride-through capability and a cathode connected to a negative electrode of the converter with direct current fault ride-through capability; wherein the converter with direct current fault ride-through capability comprises: a diode valve group and a voltage source-type valve group unit without direct current fault ride-through capability connected in series; a current source-type valve group unit and the voltage source-type valve group unit without direct current fault ride-through capability connected in series; or a voltage source-type valve group unit with direct current fault ride-through capability.

Furthermore, a cathode of the diode valve group is connected to a positive electrode of the voltage source-type valve group unit without direct current fault ride-through capability, the positive electrode of the converter with direct current fault ride-through capability is an anode of the diode valve group, and the negative electrode of the converter with direct current fault ride-through capability is a negative electrode of the voltage source-type valve group unit; or the anode of the diode valve group is connected to the negative electrode of the voltage source-type valve group unit without direct current fault ride-through capability, the positive electrode of the converter with direct current fault ride-through capability is the positive electrode of the voltage source-type valve group unit, and the negative electrode of the converter with direct current fault ride-through capability is the cathode of the diode valve group; and the diode valve group comprises a plurality of diodes connected in series.

Furthermore, a cathode of the current source-type valve group unit is connected to the positive electrode of the voltage source-type valve group unit, the positive electrode of the converter with direct current fault ride-through capability is an anode of the current source-type valve group unit, and the negative electrode of the converter with direct current fault ride-through capability is the negative electrode of the voltage source-type valve group unit; or, the anode of the current source-type valve group unit is connected to the negative electrode of the voltage source-type valve group unit, the positive electrode of the converter with direct current fault ride-through capability is the positive electrode of the voltage source-type valve group unit, and the negative electrode of the converter with direct current fault ride-through capability is the cathode of the current source-type valve group unit.

Furthermore, the current source-type valve group unit comprises: a line commutated converter; or a line commutated converter and a bypass switch connected in parallel; or, a line commutated converter, a bypass switch, and isolator assemblies, wherein the line commutated converter is connected in parallel to the bypass switch, and two ends of the line commutated converter and the bypass switch are connected to ends of the isolator assemblies, and other ends of the isolator assemblies are connected to bypass isolators.

Furthermore, the line commutated converter is a six-pulse or twelve-pulse bridge circuit and comprises a half-controlled power semiconductor which cannot be turned off.

Furthermore, the current source-type valve group unit without direct current fault ride-through capability comprises one or more of a two-level converter, a diode-clamped multilevel converter, a modular multilevel converter MMC comprising half-bridge sub-modules, a two-level cascade converter CSL, and a stacked two-level converter CTL.

Furthermore, the current source-type valve group unit with direct current fault ride-through capability comprises one or more of a modular multilevel converter MMC comprising full-bridge sub-modules, a two-level cascade converter CSL, a stacked two-level converter CTL, a hybrid modular multilevel converter HMC comprising half-bridge and full-bridge sub-modules, and a diode-clamped modular multilevel converter.

Furthermore, the voltage source-type valve group unit comprises: a voltage source converter; a voltage source converter and a bypass circuit; or a voltage source converter, a bypass circuit, and isolator assemblies, wherein two ends of the voltage source converter and the bypass circuit are connected to ends of the isolator assemblies, and other ends of the isolator assemblies are connected to bypass isolators.

Furthermore, the voltage source converter and the bypass circuit connected in parallel comprises: a circuit formed by connecting the voltage source converter to a bypass switch in parallel; or, a circuit formed by connecting the bypass switch to an inductor and then connecting a combination of the bypass switch and the inductor to the voltage source converter in parallel; or, a circuit formed by connecting the voltage source converter to an inductor and then connecting a combination of the voltage source converter and the inductor to the bypass switch in parallel.

Furthermore, the voltage source converter comprises a full-controlled power semiconductor which can be turned off, and the full-controlled power semiconductor comprises one or more of an insulated gate bipolar transistor IGBT, an integrated gate-commutated thyristor IGCT, a gate turn-off thyristor GTO, a power field-effect transistor Power MOSFET, an injection enhanced gate transistor IEGT, a gate-commutated thyristor GCT, or a silicon carbide junction field effect transistor SiC-JFET.

Furthermore, the bypass power electronic valve group comprises only one bridge arm having a plurality of power electronic switch devices connected in series. Each power electronic switch device comprises a thyristor, an IGBT, an IGCT, or a MOSFET, the IGBT, the IGCT, or the MOSFET is a silicon device or a silicon carbide device and comprises a corresponding control protection circuit. Where the power electronic switch device is the thyristor, the anode of the bypass power electronic valve group is in the anode direction of the thyristor, the cathode of the bypass power electronic valve group is in the cathode direction of the thyristor; and where the power electronic switch device is the IGBT, and the anode of the bypass power electronic valve group is in the collector direction of the IGBT, the cathode of the bypass power electronic valve group is in the emitter direction of the IGBT; or the bypass power electronic valve group is a bypass pair of line commutated converters connected in parallel or is obtained by means of fast phase shift of the line commutated converters connected in parallel.

Furthermore, an initial end or a tail end of the plurality of power electronic switch devices connected in series is connected in series to a DC transfer switch or a disconnection isolator.

The embodiment of the present application further provides a protection method of a converter. The protection method comprises the following steps: enabling the bypass power electronic valve group once detecting a fault in the voltage source-type valve group unit of the inverter; transmitting fault information to a rectifier station, so that the rectifier station and the inverter station perform cooperative control to handle the fault. The rectifier station and the inverter station perform cooperative control to handle the fault in the following way: with regard to a fault capable of being instantaneously automatically removed or isolated, a current through the bypass power electronic valve group is controlled to zero for turn-off; the rectifier station decreases a DC voltage and a DC current; and after the fault disappears, fault disappearance information is transmitted to the rectifier station, so that the rectifier station and the inverter station perform cooperative control to restart a DC transmission system; and with regard to a fault incapable of being instantaneously automatically removed or isolated, the rectifier station and the inverter station perform cooperative control to lock a converter with direct current fault ride-through capability or the DC transmission system.

Furthermore, the detecting a fault in the voltage source-type valve group unit of the inverter comprises: detecting a total DC voltage, a total DC current, or a bridge-arm current exceeding a threshold by the voltage source-type valve group unit; detecting a voltage or a current of the sub-modules exceeding a threshold; detecting an AC voltage or an AC current for indirect prediction or auxiliary determination; or recognizing a halt signal, a protection operation signal, a locking signal, or no operation signal in the voltage source-type valve group unit. The fault comprises a control system fault, a valve region fault, a main transformer region fault, and an AC system fault.

Furthermore, the voltage source-type valve group unit controls a current through the bypass power electronic valve group to zero for turn-off in the following ways: controlling the current through the bypass power electronic valve group to zero for turn-off by the inverter station playing a leading role; transmitting the fault information the rectifier station so that the current of the bypass power electronic valve group is controlled to zero for turn-off by the rectifier station playing a leading role; or controlling the current of the bypass power electronic valve group to zero for turn-off by the cooperative control of the inverter station and the rectifier station. The current through the bypass power electronic valve group is controlled to zero for turn-off in the following ways: applying a zero voltage or an inverse voltage to the bypass power electronic valve group until no current flows through the bypass power electronic valve group; turning off a DC transfer switch in a current loop of the DC transmission system; or turning off the bypass power electronic valve group. With regard to applying the zero voltage or the inverse voltage, the inverter station decreases its own DC voltage to the zero voltage or the inverse voltage where playing the leading role, the rectifier station decreases its own DC voltage to the zero voltage or the inverse voltage where playing the leading role, and the inverter station and the rectifier station perform cooperative control to decrease their own DC voltages to the zero voltage or the inverse voltage where performing cooperative control.

Furthermore, the fault information is transmitted to the rectifier station in the following ways: under a condition of normal communication between the rectifier station and the inverter station, the rectifier station revives the fault information transmitted from the inverter station or detects the DC voltage and the DC current to identify the fault information; and under a condition of a communication fault between the rectifier station and the inverter station, the rectifier station detects the DC voltage and the DC current to identify the fault information. The fault capable of being instantaneously automatically removed or isolated is a fault capable of instantaneously extinguishing an arc or being rapidly isolated by a switch or an isolator, and the fault incapable of being instantaneously automatically removed or isolated is a fault being permanent and incapable of instantaneously extinguishing an arc or a fault incapable of being rapidly isolated by a switch or an isolator.

The embodiment of the present application further provides a protection device of a converter. The protection device comprises a detection unit, a protection unit, and a control unit, wherein the detection unit detects parameters of a voltage source-type valve group unit to determine whether there is a fault in the voltage source-type valve group unit and triggers the protection unit if there is a fault. The parameters comprise a DC voltage, a DC current, a bridge-arm current, a voltage and current of a submodule, a current through a bypass power electronic valve group, an AC voltage and AC current of an AC system, and a halt signal, a protection operation signal, a locking signal, and an operation signal of the voltage source-type valve group unit. The protection unit enables the bypass power electronic valve group to transmit fault information to a rectifier station when a fault in the voltage source-type valve group unit is determined, so that the rectifier station and an inverter station perform cooperative control to handle the fault, and the control unit is triggered. The control unit and the rectifier station perform cooperative control to handle the fault in the following ways: with regard to a fault capable of being instantaneously automatically removed or isolated, a current through the bypass power electronic valve group is controlled to zero for turn-off, the rectifier station decreases the DC voltage and the DC current, and after the fault disappears, fault disappearance information is transmitted to the rectifier station, so that the rectifier station and the inverter station perform cooperative control to restart a DC transmission system; and with regard to a fault incapable of being instantaneously automatically removed or isolated, the rectifier station and the inverter station perform cooperative control to lock a converter with direct current fault ride-through capability or the DC transmission system.

According to the technical solution provided by the embodiment of the present application, by releasing DC energy by the bypass power electronic valve group, the voltage source converter in the converter with direct current fault ride-through capability is prevented against overvoltage or overcurrent, and the current of the rectifier station is controlled to zero to fulfill the restart in the case of the fault.

### Brief Description of the Drawings

In order to explain the technical solutions of the embodiments of the present application more clearly, a brief description of the accompanying drawings required for the description of the embodiments is given below. Clearly, the drawings in the following description are only used for illustrating certain embodiments of the present application, and those ordinarily skilled in the art can acquire other drawings according to the following ones without paying creative effort.
Fig. 1A is a structural diagram of a protection circuit of a converter according to one embodiment of the present application;
Fig. 1B is a structural diagram of the protection circuit of a converter according to another embodiment of the present application;
Fig. 1C is a structural diagram of the protection circuit of a converter according to another embodiment of the present application;
Fig. 1D is a structural diagram of the protection circuit of a converter according to yet another embodiment of the present application;
Fig. 1E is a structural diagram of the protection circuit of a converter according to still another embodiment of the present application;
Fig. 2A is a schematic diagram of a half-bridge submodule for a modular multilevel converter according to one embodiment of the present application;
Fig. 2B is a schematic diagram of the half-bridge submodule for the modular multilevel converter according to another embodiment of the present application;
Fig. 3A is a structural diagram of a current source-type valve group unit according to one embodiment of the present application;
Fig. 3B is a structural diagram of the current source-type valve group unit according to another embodiment of the present application;
Fig. 3C is a structural diagram of the current source-type valve group unit according to yet another embodiment of the present application;
Fig. 4A is a structural diagram of a voltage source-type valve group unit according to one embodiment of the present application;
Fig. 4B is a structural diagram of the voltage source-type valve group unit according to another embodiment of the present application;
Fig. 4C is a structural diagram of the voltage source-type valve group unit according to yet another embodiment of the present application;
Fig. 5A is a schematic diagram of a voltage source converter and a bypass circuit thereof according to one embodiment of the present application;
Fig. 5B is a structural diagram of the voltage source converter and the bypass circuit thereof according to another embodiment of the present application;
Fig. 5C is a structural diagram of the voltage source converter and the bypass circuit thereof according to yet another embodiment of the present application;
Fig. 6 is a structure diagram of a hybrid DC transmission circuit, having a transmitting end based on line commutated converters and a receiving end based on voltage source converters, according to an embodiment of the present application;
Fig. 7 is a structure diagram of a hybrid DC transmission circuit, having a transmitting end based on a serial-connected structure of line commutated converters and a receiving end based on a serial-connected structure of line commutated converters and voltage source converters, according to an embodiment of the present application;
Fig. 8 is a flow diagram of a protection method of a converter according to an embodiment of the present application;
Fig. 9 is a structural diagram of a protection device of a converter according to an embodiment of the present application.

### Detailed Description of Embodiments

To gain a better understanding of the objectives, technical solutions, and advantages of the embodiments of the present application, the specific implementations of the technical solutions of the present application are further expounded more clearly below with reference to the accompanying drawings and embodiments. Obviously, the following implementations and embodiments are only for an illustrative purpose, and are not intended to limit the present application. These embodiments are merely illustrative ones, and are not all possible ones of the present application. All other embodiments obtained by those skilled in the art based on various modifications to the present application should also fall within the scope of the present application.

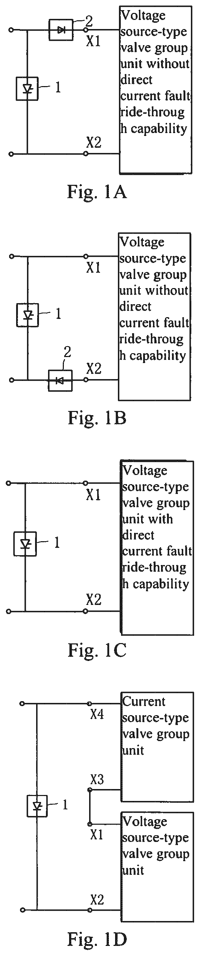

Fig. 1A to Fig. 1E show a protection circuit of a converter in an embodiment of the present application. The protection circuit is used to protect a converter with direct current fault ride-through capability and comprises at least one bypass power electronic valve group which includes, but is not limited to, a bypass thyristor valve group and the like. A connection manner is as follows: the bypass thyristor valve group 1 is connected in parallel to two ends of the converter with direct current fault ride-through capability, that is, an anode of the bypass thyristor valve group 1 is connected to a positive electrode of the converter with direct current fault ride-through capability, and a cathode of the bypass thyristor valve group 1 is connected to a negative electrode of the converter with direct current fault ride-through capability.

Fig. 1A and Fig. 1B show topological structures of a diode valve group 2 and a voltage source-type valve group unit without direct current fault ride-through capability, which are connected in series. As shown in Fig. 1A, a cathode of the diode valve group is connected to a positive electrode X1 of the voltage source-type valve group unit without direct current fault ride-through capability, the positive electrode of the converter is an anode of the diode valve group 2 , the negative electrode of the converter is a negative electrode X2 of the voltage source-type valve group unit, and the bypass thyristor valve group 1 is connected in parallel to the two ends of the converter. As shown in Fig. 1B, the anode of the diode valve group is connected to the negative electrode X2 of the voltage source-type valve group unit without direct current fault ride-through capability, the positive electrode of the converter is the positive electrode X1 of the voltage source-type valve group unit, and the negative electrode of the converter is the cathode of the diode valve group 2, and the bypass thyristor valve group 1 is connected in parallel to the two ends of the converter.

Fig. 1C shows that the bypass thyristor valve group 1 is connected in parallel to two ends of a voltage source-type valve group unit with direct current fault ride-through capability.

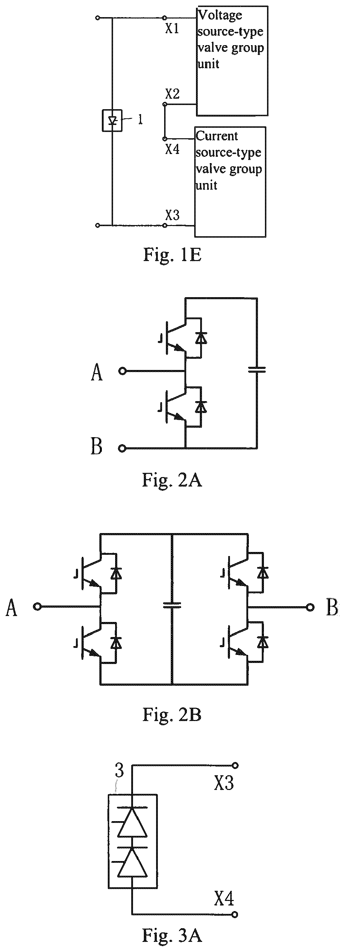

Fig. 1D and Fig. 1E show two topological structures of hybrid DC converter formed by a current source-type valve group unit and the voltage source-type valve group unit without direct current fault ride-through capability, which are connected in series. As shown in Fig. ID, a cathode X3 of the current source-type valve group unit is connected to the positive electrode X1 of the voltage source-type valve group unit, the positive electrode of the converter with direct current fault ride-through capability is an anode X4 of the current source-type valve group unit, and the negative electrode of the converter with direct current fault ride-through capability is the negative electrode X2 of the voltage source-type valve group unit. As shown in Fig. IE, the anode X4 of the current source-type valve group unit is connected to the negative electrode X2 of the voltage source-type valve group unit, the positive electrode of the converter with direct current fault ride-through capability is the positive electrode X1 of the voltage source-type valve group unit, and the negative electrode of the converter with direct current fault ride-through capability is the cathode X3 of the current source-type valve group unit.

Fig. 2A and Fig. 2B show two typical sub-modules used for a modular multilevel converter. As shown in Fig. 2A, a half-bridge submodule is comprising two IGBT switch devices and a capacitor, with a port A as its positive end and a port B as its negative end; and the half-bridge sub-modules can be connected in series to form a voltage source converter without direct current fault ride-through capability. As shown in Fig. 2B, a full-bridge submodule is comprising four IGBT switch devices and a capacitor, with a port A as its positive end and a port B as its negative end; and the full-bridge sub-modules can be connected in series to form a voltage source converter with direct current fault ride-through capability. The sub-modules shown in Fig. 2A and Fig. 2B can be connected in series in a hybrid manner to form a voltage source converter with direct current fault ride-through capability.

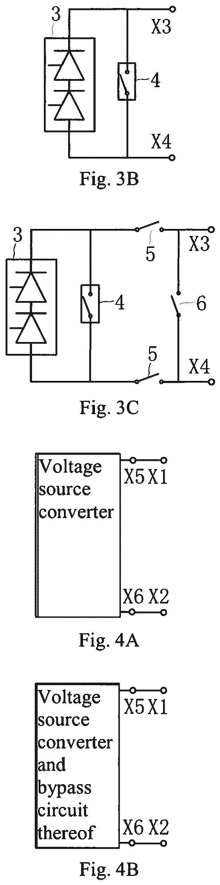

Fig. 3A to Fig. 3C show structural diagrams of one current source-type valve group unit. As shown in Fig. 3A, the current source-type valve group unit includes a line commutated converter 3. As shown in Fig. 3B, the current source-type valve group unit includes the line commutated converter 3 and a bypass switch 4 connected in parallel. As shown in Fig. 3C, the current source-type valve group unit includes the line commutated converter 3 and a mechanical bypass switch 4 connected in parallel , two ends of the unit obtained after parallel connection are respectively connected to ends of connection isolators 5, and a bypass isolator 6 is connected in parallel to other ends of the connection isolators 5.

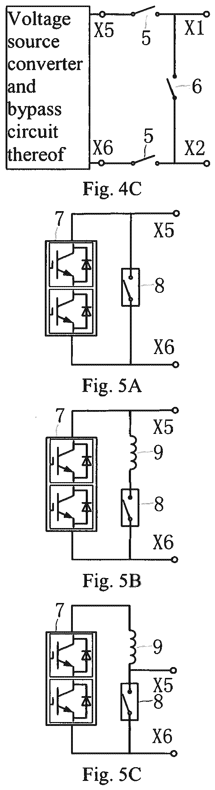

Fig. 4A to Fig. 4C show structural diagrams of another voltage source-type valve group unit. As shown in Fig. 4A, the voltage source-type valve group unit includes a voltage source converter. As shown in Fig. 4B, the voltage source-type valve group unit includes the voltage source converter and a bypass circuit thereof. As shown in Fig. 4C, the voltage source-type valve group unit includes the voltage source converter and the bypass circuit thereof, and two ends X5 and X6 are respectively connected to ends of connection isolators 5, and a bypass isolator 6 is connected in parallel to other ends of the connection isolators 5.

Wherein, there are three structural forms of the voltage source converter and the bypass circuit thereof. As shown in Fig. 5A, a mechanical bypass switch or a power electronic switch 8 is connected in parallel to the voltage source converter 7 to form a circuit. As shown in Fig. 5B, the mechanical bypass switch or the power electronic switch 8 is connected to an inductor 9 and is then connected in parallel to the voltage source converter 7 to form a circuit. As shown in Fig. 5C, the voltage source converter 7 is connected to the inductor 9 and is then connected in parallel to the mechanical bypass switch or the power electronic switch 8.

The line commutated converter 3 is a six-pulse or twelve-pulse three-phase bridge circuit, wherein the twelve-pulse three-phase bridge circuit includes two six-pulse three-phase bridge circuits connected in series. The voltage source converter 7 is one or more of a two-level converter, a diode-clamped multilevel converter, the modular multilevel converter MMC, a hybrid modular multilevel converter HMC, a two-level cascade converter CSL, and a stacked two-level converter CTL.

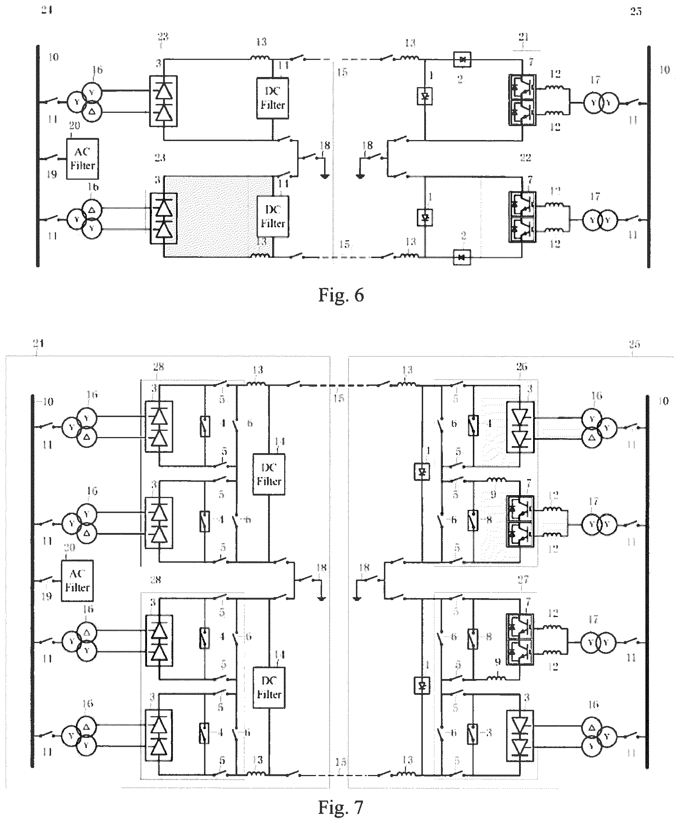

Fig. 6 shows a structure diagram of a hybrid DC transmission circuit, having a transmitting end based on line commutated converters and a receiving end based on voltage source converters, according to an embodiment of the present application. Fig. 6 further shows a converter with a HVDC transmission device rectifier station formed by current source-type valve group units, and a converter with an inverter station formed by diode valve groups 2 and voltage source-type valve group units without direct current fault ride-through capability, which are connected in series, according to an embodiment.

The HVDC transmission device rectifier station 24 comprises current source-type valve group units 23, and the inverter station 25 comprises voltage source-type valve group units 21 and 22 without direct current fault ride-through capability respectively serving as a positive converter and a negative converter thereof. Valve groups 3 are the line commutated converters and are connected to secondary windings of HVDC transmission transformers 16 based on line commutation, and valve groups 7 are the voltage source converters and are connected to secondary windings of HVDC transmission transformers 17 based on the voltage source converters. An AC filter 20 configured in the rectifier station 24 is connected to an AC network 10 through an AC switch 19 to filter harmonics and to supply reactive power and is connected to and disconnected from the AC network 10 through a corresponding AC switch 11. In order to suppress the bridge-arm circulating current of the voltage source-type valve group units and the surge current under a fault, bridge-arm reactors 12 are configured; and in order to smooth the DC voltage of the DC circuit and to suppress the DC fault current, smoothing reactors 13 are configured. As shown in Fig. 6, grounding electrode leads 18 are configured for connecting the converters to a grounding electrode. DC filters 14 are configured between DC lines 15 and the corresponding grounding electrode leads 18 of the rectifier station. In the inverter station, a positive electrode of the voltage source-type valve group unit 21 is connected to a cathode of the corresponding diode valve group 2 and has two ends connected in parallel to a corresponding bypass thyristor valve group 1, and a negative electrode of the voltage source-type valve group unit 22 is connected to an anode of a corresponding diode valve group 2 and has two ends connected in parallel to a corresponding bypass thyristor valve group 1.

Fig. 7 shows a structure diagram of a hybrid DC transmission circuit, having a transmitting end based on a serial-connected structure of line commutated converters and a receiving end based on a serial-connected structure of line commutated converters and voltage source converters, in an embodiment of the present application. Fig. 7 further shows converters, of a HVDC transmission device rectifier station, formed by current source-type valve group units connected in series and hybrid DC converters, of an inverter station, formed by current source-type valve group units and voltage source-type valve group units, which are connected in series, according to an embodiment.

The HVDC transmission device rectifier station 24 is formed by a topological structure 28 comprising the current source-type valve group units connected in series, and the inverter station 25 comprises a hybrid DC converter 26 and a hybrid DC converter 27 respectively serving as a positive converter and a negative converter thereof. Valve groups 3 are the line commutated converters and are connected to secondary windings of HVDC transmission transformers 16 based on line commutation, and valve groups 7 are the voltage source converters and are connected to secondary windings of HVDC transmission transformers 17 based on the voltage source converters. An AC filter 20 configured in the rectifier station 24 is connected to an AC network 10 through an AC switch 19 to filter harmonics and to supply reactive power and is connected to and disconnected from the AC network 10 through two corresponding AC switches 11. In order to suppress the bridge-arm circulating current of the voltage source-type valve group units and the surge current under a fault, bridge-arm reactors 12 are configured; and in order to smooth the DC voltage of the DC circuit and to suppress the DC fault current, smoothing reactors 13 are configured. As shown in Fig. 7, grounding electrode leads 18 are configured for connecting the converters to a grounding electrode through grounding electrode leads 18. In the rectifier station, DC filters 14 are configured between DC lines 15 and the grounding electrode lead 18. In the inverter station, bypass thyristor valve groups 1 are respectively connected in parallel to two ends of the hybrid DC converter 26 and two ends of the hybrid DC converter 27.

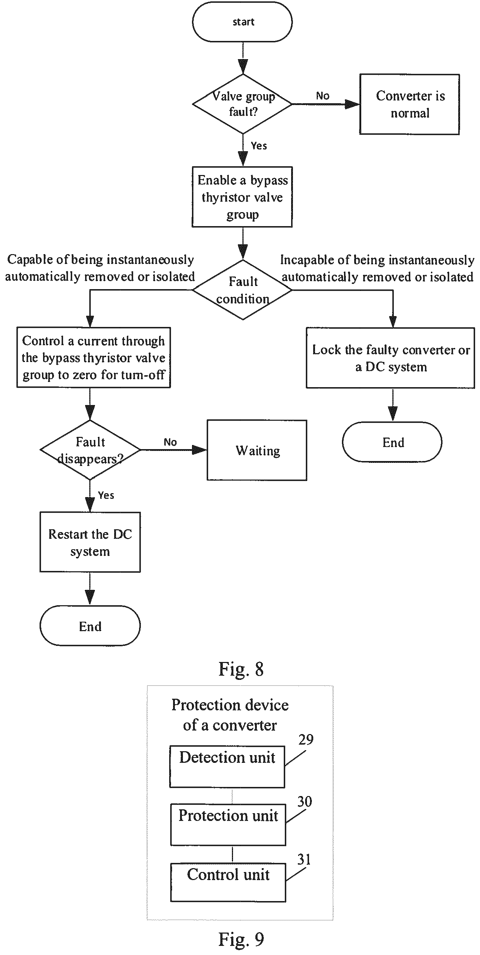

Fig. 8 shows a protection method of a converter of the present application for controlling the protection circuit of a converter shown in Fig. 6 and Fig. 7.

When it detected that the voltage source-type valve group unit 21 or 22 shown in Fig. 6 has a fault, the corresponding bypass thyristor valve group 1 is enabled to transmit fault information to the rectifier station 24, so that the rectifier station and the inverter station perform cooperative control to handle the fault.

The fault includes a fault capable of being instantaneously automatically removed or isolated and a fault incapable of being instantaneously automatically removed or isolated, wherein the fault capable of being instantaneously automatically removed or isolated is a fault capable of instantaneously extinguishing an arc or being rapidly isolated by a switch or an isolator, and the fault incapable of being instantaneously automatically removed or isolated is a fault being permanent and incapable of instantaneously extinguishing an arc or a fault incapable of being rapidly isolated by a switch or an isolator.

With regard to the fault capable of being instantaneously automatically removed or isolated , such as an instantaneous three-phase ground fault of an AC system, the current source-type valve group units 23 of the rectifier station 24 decrease a DC voltage and a DC current by means of phase shift to control a current through the bypass thyristor valve groups 1 to zero for turn-off; and after the fault disappears, the fault disappearance information is transmitted to the rectifier station, so that the rectifier station and the inverter station cooperatively control to restart a DC transmission system.

A current through the bypass thyristor valve groups 1 is controlled to zero for turn-off by applying a zero voltage or an inverse voltage to the bypass thyristor valve groups 1, or by turning off a DC transfer switch in a current loop of the DC transmission system, or, by turning off a bypass power electronic valve group. Following methods are implement to control a current through the bypass thyristor valve groups 1 to zero for turn-off: the inverter station plays a leading role to control a current through the bypass thyristor valve groups 1 to zero for turn-off, or the fault information is transmitted to the rectifier station so that the rectifier station plays a leading role to control a current through the bypass thyristor valve groups 1 to zero for turn-off, or the inverter station and the rectifier station cooperatively control a current through the bypass thyristor valve groups 1 to zero for turn-off.

With regard to the application of the zero voltage or the inverse voltage to the bypass thyristor valve groups 1, the inverter station decreases its own DC voltage to the zero voltage or the inverse voltage where playing the leading role, the rectifier station decreases its own DC voltage to the zero voltage or the inverse voltage where playing the leading role, and the inverter station and the rectifier station perform cooperative control to decrease their own DC voltages to the zero voltage or the inverse voltage where performing cooperative control.

With regard to the fault incapable of being instantaneously automatically removed or isolated, such as the fault of the voltage source converters itself, the rectifier station and the inverter station perform cooperative control to lock the converters with direct current fault ride-through capability or the DC transmission system.

When it detected that the voltage source-type valve group units shown in Fig. 7 has a fault, the bypass thyristor valve groups 1 are enabled to transmit fault information to the rectifier station 24, so that the rectifier station and the inverter station perform cooperative control to handle the fault.

With regard to the fault capable of being instantaneously automatically removed or isolated, such as the instantaneous three-phase ground fault of the AC system, the current source-type valve group units 23 of the rectifier station 24 decrease the DC voltage and the DC current by means of the phase shift to control a current through the bypass thyristor valve group 1 to zero for turn-off; or after the fault disappears, the fault disappearance information is transmitted to the rectifier station, so that the rectifier station and the inverter station perform cooperative control to restart the DC transmission system.

A current through The bypass thyristor valve groups 1 is controlled to zero for turn-off by applying a zero voltage or an inverse voltage to the bypass thyristor valve groups 1, or by turning off the DC transfer switch in a current loop of the DC transmission system, or by turning off the bypass power electronic valve group. Following methods are implement to control a current through the bypass thyristor valve groups 1 to zero for turn-off: the inverter station plays a leading role to control a current through the bypass thyristor valve groups 1 to zero for turn-off, or the fault information is transmitted to the rectifier station so that the rectifier station plays a leading role to control a current through the bypass thyristor valve groups 1 to zero for turn-off, or the inverter station and the rectifier station cooperatively control a current through the bypass thyristor valve groups 1 to zero for turn-off.

With regard to the application of the zero voltage or the inverse voltage to the bypass thyristor valve groups 1, the inverter station decreases its own DC voltage to the zero voltage or the inverse voltage where playing the leading role, the rectifier station decreases its own DC voltage to the zero voltage or the inverse voltage where playing the leading role, and the inverter station and the rectifier station perform cooperative control to decrease their own DC voltages to the zero voltage or the inverse voltage where performing cooperative control.

With regard to the fault incapable of being instantaneously automatically removed, such as the fault of the voltage source converters itself, the voltage source converters are locked, and the fault is isolated; and other fault-free converters of the DC transmission system are reorganized and continue to operate. With regard to the fault incapable of being isolated, such as a ground fault of the connecting line of the valve groups, the DC transmission system is locked.

Fig. 9 shows a protection device of a converter of the present application for controlling the protection circuit of a converter with direct current fault ride-through capability, which is shown in Fig. 6 and Fig. 7. The protection device comprises a detection unit 29, a protection unit 30, and a control unit 31.

The detection unit 29 detects parameters of the voltage source-type valve group units to determine whether there is a fault in the voltage source-type valve group units and triggers the protection unit 30 if there is a fault. The parameters of the voltage source-type valve group units include, but are not limited to, a DC voltage, a DC current, a bridge-arm current, a voltage and current of a submodule, a current through a bypass thyristor valve group, an AC voltage and AC current of an AC system, a halt signal, a protection operation signal, a locking signal, and an operation signal of a voltage source-type valve group unit, and the like.

The protection unit 30 enables the bypass thyristor valve groups to transmit fault information to the rectifier station when a fault in the voltage source-type valve group units is determined, so that the rectifier station and the inverter station perform cooperative control to handle the fault, and the control unit 31 is triggered.

The control unit 31 and the rectifier station perform cooperative control to handle the fault. With regard to a fault capable of being instantaneously automatically removed or isolated, a current through a bypass power electronic valve group is controlled to zero for turn-off; the rectifier station decreases a DC voltage and a DC current; and after the fault disappears, fault disappearance information is transmitted to the rectifier station, so that the rectifier station and the inverter station perform cooperative control to restart a DC transmission system. With regard to a fault incapable of being instantaneously automatically removed or isolated, the rectifier station and the inverter station perform cooperative control to lock a converter with direct current fault ride-through capability or the DC transmission system.

It should be noted that the embodiments mentioned above with reference to the accompanying drawings are only illustrative ones used for explaining the present application, and are not used for limiting the scope of the present application. Those ordinarily skilled in the art would appreciate that all modifications or equivalent replacements made without deviating from the spirit and scope of the present application should also fall within the scope of present application. Furthermore, unless otherwise specified in the context, words in the singular form include the plural form, and vice versa. Besides, unless otherwise explicitly specified, part or all of any embodiments can be implemented in combination with part or all of other embodiments.

## Claims

1. A protection circuit of a converter, used to protect a voltage source converter in a voltage source-type valve group unit of an inverter station, comprising:
at least one bypass power electronic valve group being connected in parallel to a converter with direct current fault ride-through capability and having an anode connected to a positive electrode of the converter with direct current fault ride-through capability and a cathode connected to a negative electrode of the converter with direct current fault ride-through capability;
wherein the converter with direct current fault ride-through capability comprises:
a diode valve group and a voltage source-type valve group unit without direct current fault ride-through capability connected in series;
a current source-type valve group unit and the voltage source-type valve group unit without direct current fault ride-through capability connected in series; or
a voltage source-type valve group unit with direct current fault ride-through capability.

2. The protection circuit of a converter according to Claim 1, wherein
a cathode of the diode valve group is connected to a positive electrode of the voltage source-type valve group unit without direct current fault ride-through capability, the positive electrode of the converter with direct current fault ride-through capability is an anode of the diode valve group, and the negative electrode of the converter with direct current fault ride-through capability is a negative electrode of the voltage source-type valve group unit; or
the anode of the diode valve group is connected to the negative electrode of the voltage source-type valve group unit without direct current fault ride-through capability, the positive electrode of the converter with direct current fault ride-through capability is the positive electrode of the voltage source-type valve group unit, and the negative electrode of the converter with direct current fault ride-through capability is the cathode of the diode valve group; and
wherein the diode valve group comprises a plurality of diodes connected in series.

3. The protection circuit of a converter according to Claim 1, wherein
a cathode of the current source-type valve group unit is connected to the positive electrode of the voltage source-type valve group unit, the positive electrode of the converter with direct current fault ride-through capability is an anode of the current source-type valve group unit, and the negative electrode of the converter with direct current fault ride-through capability is the negative electrode of the voltage source-type valve group unit; or
the anode of the current source-type valve group unit is connected to the negative electrode of the voltage source-type valve group unit, the positive electrode of the converter with direct current fault ride-through capability is the positive electrode of the voltage source-type valve group unit, and the negative electrode of the converter with direct current fault ride-through capability is the cathode of the current source-type valve group unit.

4. The protection circuit of a converter according to Claim 1, wherein the current source-type valve group unit comprises:
a line commutated converter;
a line commutated converter and a bypass switch connected in parallel; or
a line commutated converter, a bypass switch, and isolator assemblies, wherein the line commutated converter is connected in parallel to the bypass switch, and two ends of the line commutated converter and the bypass switch are connected to ends of the isolator assemblies, and other ends of the isolator assemblies are connected to bypass isolators.

5. The protection circuit of a converter according to Claim 4, wherein the line commutated converter is a six-pulse or twelve-pulse bridge circuit and comprises a half-controlled power semiconductor which cannot be turned off.

6. The protection circuit of a converter according to Claim 1, wherein the current source-type valve group unit without direct current fault ride-through capability comprises one or more of a two-level converter, a diode-clamped multilevel converter, a modular multilevel converter MMC comprising half-bridge sub-modules, a two-level cascade converter CSL, and a stacked two-level converter CTL.

7. The protection circuit of a converter according to Claim 1, wherein the current source-type valve group unit with direct current fault ride-through capability is one or more of a modular multilevel converter MMC comprising full-bridge sub-modules, a two-level cascade converter CSL, a stacked two-level converter CTL, a hybrid modular multilevel converter HMC comprising half-bridge and full-bridge sub-modules, and a diode-clamped modular multilevel converter.

8. The protection circuit of a converter according to Claim 1, wherein the voltage source-type valve group unit comprises:
a voltage source converter;
a voltage source converter and a bypass circuit; or
a voltage source converter, a bypass circuit, and isolator assemblies, wherein two ends of the voltage source converter and the bypass circuit are connected to ends of the isolator assemblies, and other ends of the isolator assemblies are connected to bypass isolators.

9. The protection circuit of a converter according to Claim 8, wherein the voltage source converter and the bypass circuit connected in parallel comprises:
a circuit formed by connecting the voltage source converter to a bypass switch in parallel;
a circuit formed by connecting the bypass switch to an inductor and then connecting a combination of the bypass switch and the inductor to the voltage source converter in parallel; or
a circuit formed by connecting the voltage source converter to an inductor and then connecting a combination of the voltage source converter and the inductor to the bypass switch in parallel.

10. The protection circuit of a converter according to Claim 8, wherein the voltage source converter comprises a full-controlled power semiconductor which can be turned off, and the full-controlled power semiconductor comprises one or more of an insulated gate bipolar transistor IGBT, an integrated gate-commutated thyristor IGCT, a gate turn-off thyristor GTO, a power field-effect transistor Power MOSFET, an injection enhanced gate transistor IEGT, a gate-commutated thyristor GCT, and a silicon carbide junction field effect transistor SiC-JFET.

11. The protection circuit of a converter according to Claim 1, wherein
the bypass power electronic valve group comprises only one bridge arm having a plurality of power electronic switch devices connected in series; each said power electronic switch device comprises a thyristor, an IGBT, an IGCT, or a MOSFET, the IGBT, the IGCT, or the MOSFET is a silicon device or a silicon carbide device and comprises a corresponding control protection circuit; where the power electronic switch device is the thyristor, the anode of the bypass power electronic valve group is in an anode direction of the thyristor, the cathode of the bypass power electronic valve group is in a cathode direction of the thyristor; and where the power electronic switch device is the IGBT, the anode of the bypass power electronic valve group is in a collector direction of the IGBT and the cathode of the bypass power electronic valve group is in an emitter direction of the IGBT; or
the bypass power electronic valve group is a bypass pair of line commutated converters connected in parallel or is obtained by means of fast phase shift of the line commutated converters connected in parallel.

12. The protection circuit of a converter according to Claim 11, wherein an initial end or a tail end of the plurality of power electronic switch devices connected in series is connected in series to a DC transfer switch or a disconnection isolator.

13. A protection method of a converter for the protection circuit of a converter according to any one of Claims 1-12, comprising:
enabling the bypass power electronic valve group once detecting a fault in the voltage source-type valve group unit of the inverter;
transmitting fault information to a rectifier station, so that the rectifier station and the inverter station perform cooperative control to handle the fault in the following way:
with regard to a fault capable of being instantaneously automatically removed or isolated, a current through the bypass power electronic valve group is controlled to zero for turn-off; the rectifier station decreases a DC voltage and a DC current; and after the fault disappears, fault disappearance information is transmitted to the rectifier station, so that the rectifier station and the inverter station perform cooperative control to restart a DC transmission system; and
with regard to a fault incapable of being instantaneously automatically removed or isolated, the rectifier station and the inverter station perform cooperative control to lock the converter with direct current fault ride-through capability or the DC transmission system.

14. The protection method of a converter according to Claim 13, wherein the detecting a fault in the voltage source-type valve group unit of the inverter comprises:
detecting a total DC voltage, a total DC current, or a bridge-arm current exceeding a threshold by the voltage source-type valve group unit;
detecting a voltage or a current of the sub-modules exceeding a threshold;
detecting an AC voltage or an AC current for indirect prediction or auxiliary determination; or
recognizing a halt signal, a protection operation signal, a locking signal, or no operation signal in the voltage source-type valve group unit; and
wherein the fault comprises a control system fault, a valve region fault, a main transformer region fault, and an AC system fault.

15. The protection method of a converter according to Claim 13, wherein controlling a current of the bypass power electronic valve group to zero for turn-off comprises:
controlling the current of the bypass power electronic valve group to zero for turn-off by the inverter station playing a leading role;
transmitting the fault information to the rectifier station so that the current of the bypass power electronic valve group is controlled to zero for turn-off by the rectifier station playing a leading role; or
controlling the current of the bypass power electronic valve group to zero for turn-off by the cooperative control of the inverter station and the rectifier station; and
wherein controlling the current of the bypass power electronic valve group to zero for turn-off comprises: applying a zero voltage or an inverse voltage to the bypass power electronic valve group until no current flows through the bypass power electronic valve group; turning off a DC transfer switch in a current loop of the DC transmission system; or turning off the bypass power electronic valve group ; and
with regard to applying the zero voltage or the inverse voltage, the inverter station decreases its own DC voltage to the zero voltage or the inverse voltage where playing the leading role, the rectifier station decreases its own DC voltage to the zero voltage or the inverse voltage where playing the leading role, and the inverter station and the rectifier station perform cooperative control to decrease their own DC voltages to the zero voltage or the inverse voltage where performing cooperative control.

16. The protection method of a converter according to Claim 13, wherein transmitting the fault information to the rectifier station is performed by the following ways:
under a condition of normal communication between the rectifier station and the inverter station, the rectifier station revives the fault information transmitted from the inverter station or detects the DC voltage and the DC current to identify the fault information; and
under a condition of a communication fault between the rectifier station and the inverter station, the rectifier station detects the DC voltage and the DC current to identify the fault information; and
wherein the fault capable of being instantaneously automatically removed or isolated is a fault capable of instantaneously extinguishing an arc or being rapidly isolated by a switch or an isolator; and
the fault incapable of being instantaneously automatically removed or isolated is a fault being permanent and incapable of instantaneously extinguishing an arc or a fault incapable of being rapidly isolated by a switch or an isolator.

17. A protection device of a converter for the protection circuit of a converter according to any one of Claims 1-12, comprising:
a detection unit, detecting parameters of the voltage source-type valve group unit to determine whether there is a fault in the voltage source-type valve group unit and triggering the protection unit if there is a fault, wherein the parameters comprise a DC voltage, a DC current, a bridge-arm current, a voltage and current of a sub-module, a current through the bypass power electronic valve group, an AC voltage and AC current of an AC system, and a halt signal, a protection operation signal, a locking signal, and an operation signal of the voltage source-type valve group unit;
a protection unit, enabling the bypass power electronic valve group to transmit fault information to a rectifier station when a fault in the voltage source-type valve group unit is determined, so that the rectifier station and an inverter station perform cooperative control to handle the fault, and a control unit is triggered; and
the control unit for handling the fault in cooperation with the rectifier station in the following ways:
with regard to a fault capable of being instantaneously automatically removed or isolated, a current through the bypass power electronic valve group is controlled to zero for turn-off, the rectifier station decreases the DC voltage and the DC current, and after the fault disappears, fault disappearance information is transmitted to the rectifier station, so that the rectifier station and the inverter station perform cooperative control to restart a DC transmission system; and
with regard to a fault incapable of being instantaneously automatically removed or isolated, the rectifier station and the inverter station perform cooperative control to lock the converter with direct current fault ride-through capability or the DC transmission system.
